Europäisches Patentamt

(19) European Patent Office

Office européen des brevets

(11) Veröffentlichungsnummer: **0 037 018**
**B1**

# (12) EUROPÄISCHE PATENTSCHRIFT

(45) Veröffentlichungstag der Patentschrift:
30.04.86

(51) Int. Cl.⁴: **C 01 B 33/28**

(21) Anmeldenummer: 81102056.9

(22) Anmeldetag: 19.03.81

(54) Verfahren zur Herstellung feinstteiliger zeolithischer Natriumaluminiumsilikate.

(30) Priorität: 27.03.80 DE 3011834

(43) Veröffentlichungstag der Anmeldung:
07.10.81 Patentblatt 81/40

(45) Bekanntmachung des Hinweises auf die Patenterteilung:
30.04.86 Patentblatt 86/18

(84) Benannte Vertragsstaaten:
AT BE CH DE FR GB IT LI LU NL SE

(56) Entgegenhaltungen:
FR - A - 2 266 794

(73) Patentinhaber: Henkel Kommanditgesellschaft auf Aktien, Postfach 1100 Henkelstrasse 67,
D-4000 Düsseldorf-Holthausen (DE)
Patentinhaber: Degussa Aktiengesellschaft,
Weissfrauenstrasse 9, D-6000 Frankfurt am Main 1 (DE)

(72) Erfinder: Carduck, Franz-Josef, Dr., Landstrasse 18,
D-5657 Haan (DE)
Erfinder: Peters, Bernd Willi, Gabelstrasse 13,
D-5650 Solingen 1 (DE)
Erfinder: Koch, Otto, Dr., Vogelwarde 15,
D-5652 Leichlingen (DE)
Erfinder: Vogler, Rainer, Dr., Witzlebenstrasse 51,
D-8500 Nürnberg (DE)
Erfinder: Christophliemk, Peter, Dr.,
Rudolf-Breitscheid-Strasse 61,
D-4000 Düsseldorf 13 (DE)
Erfinder: Wüst, Willi, Dr., Fasanenring 32,
D-4030 Ratingen-Hösel (DE)

## Beschreibung

Gegenstand der Erfindung ist ein Verfahren zur Herstellung einer wäßrigen alkalischen Suspension feinstteiliger, gritarmer, kristalliner zeolithischer Natriumaluminiumsilikate durch kontinuierliches Vermischen einer wäßrigen Natriumaluminatlögung mit einer wäßrigen Natriumsilikatlösung und anschließender diskontinuierlicher Kristallisation der gebildeten wäßrigen alkalischen Suspension röntgenamorpher Natriumaluminiumsilikate.

Röntgenamorphe Natriumaluminiumsilikate werden in der Regel durch diskontinuierliches oder auch kontinuierliches Vermischen einer wäßrigen Natriumaluminatlösung mit einer wäßrigen Natriumsilikatlösung in Gegenwart überschüssiger Natronlauge bei erhöhter Temperaturdas heißt vorzugsweiss bei Temperaturen im Bereich von 55 bis 70°C - hergestellt. Hierbei entsprechen die in der Technik gebräuchlichen Ansatz- und Konzentrationsbereiche der Reaktionspartner im allgemeinen einer rechnerischen Gesamtzusammensetzung bezüglich der Molverhältnisse von:

1,5 bis 5 $Na_2O$: 1 $Al_2O_3$: 1 bis 4 $SiO_2$: 40 bis 400 $H_2O$.

Bei derartigen Ansatzverhältnissen bildet sich stets eine Suspension eines röntgenamorphen, wasserhaltigen Natriumaluminiumsilikats mit einem hohen Überschuß an Natronlauge. Nach Abtrennen der Mutterlauge und Auswaschen des überschüssigen Alkalis lassen sich aus einer solchen Suspension entsprechende röntgenamorphe Produkte isolieren, deren Wassergehalt vom Trocknungsgrad und deren Silikatgehalt weitgehend vom $SiO_2$/ $Al_2O_3$-Molverhältnis im Reaktionsansatz bestimmt werden. Für die meisten technischen Anwendungszwecke werden jedoch nicht derartige amorphe Natriumaluminiumsilikate verwendet, sondern deren kristalline, vorzugsweise zeolithische Folgeprodukte.

Die sogenannten Zeolithe bilden eine Mineralklasse kristallwasserhaltiger Alkalimetallaluminiumsilikate mit definierter Poren- und Hohlraumstruktur ihres Aluminiumsilikat-Gitters. Synthetische Zeolithe haben eine zunehmende technische Bedeutung gewonnen und werden beispielsweise als Kationenaustauscher vor allem zum Enthärten von Wasser, als Katalysatorträger bei chemischen Prozessen, als Trocken-, Trenn- oder Sorptionsmittel für Lösungsmittel und Gase ("Molekularsiebe") sowie als heterogene anorganische Builderstoffe in Waschund Reinigungsmitteln eingesetzt. Je nach Verwendungszweck sind strukturell unterschiedliche Zeolith-Typen sowie ferner unterschiedliche Trocken- und Reinheitsgrade derselben erforderlich. Üblicherweise werden solche Zeolithe zunächst in ihrer Natriumform hergestellt und - falls erwünscht - anschließend durch Kationenaustausch in andere Formen umgewandelt.

In Hinblick auf die vorstehend erwähnten Anwendungszwecke hat insbesondere das zeolithische Natriumaluminiumsilikat vom Typ NaA technische Bedeutung erlangt. Die chemische Zusammensetzung dieses Zeolith-Typs entspricht in etwa der Summenformel:

0,8 bis 1,3 $Na_2O$: 1 $Al_2O_3$: 1,8 bis 2,5 $SiO_2$: 0 bis 6 $H_2O$.

Das charakteristische Röntgenbeugungsdiagramm des Zeoliths NaA ist beispielsweise in der deutschen Auslegeschrift DE-AS 10 38 017 beschrieben.

Die Umwandlung von amorphen Natriumaluminiumsilikaten in die kristallinen zeolithischen Formen ist ein von verschiedenen Parametern abhängiger Kristallisationsvorgang, der mit steigender Temperatur schneller verläuft. In der Regel wird hierbei die in der ersten Verfahrensstufe - dem Vermischen der Reaktionspartner - erhaltene Suspension des amorphen Produktes für einen gewissen Zeitraum bei erhöhten Temperaturen gehalten. Je nach den Molverhältnissen der Reakionspartner im Ansatz und der Temperaturführung erfordert die Bildung kristalliner Produkte einen Zeitraum von wenigen Minuten bis zu mehreren Tagen. Zur Gewinnung des Zeoliths NaA wird dieser Kristallisationsprozeß vornehmlich unter Normaldruck und bei Temperaturen im Bereich von 70 bis 100°C vorgenommen. Auf diese Weise läßt sich bei einer entsprechenden Zusammensetzung der wäßrigen alkalischen Suspension röntgenamorpher Natriumaluminiumsilikate im allgemeinen ein hochkristalliner Zeolith des Typs NaA herstellen.

Für die meisten technischen Anwendungszwecke wird hierbei ein sehr feinteiliger Zeolith mit einer möglichst engbandigen Korngrößenverteilung und einer mittleren Korngröße unter 10 µm bevorzugt. Insbesondere bei Verwendung des Zeoliths NaA in Wasch- und Reinigungsmitteln soll darüber hinaus dessen Anteil an Teilchen mit einer Korngröße oberhalb 50 µm - nachfolgend als "Grit" bezeichnet - nicht mehr als 0,2 Gewichtsprozent betragen beziehungsweise unterhalb dieser Grenze liegen sowie ferner dessen Kationenaustauschvermögen möglichst hoch sein.

Bei diskontinuierlicher Umsetzung der Reaktionskomponenten und nachfolgender diskontinuierlicher Kristallisation wurden bislang - bei Anwendung der herkömmlichen Reaktions- und Kristallisationsbedingungen Zeolithe vom Typ NaA erhalten, die Gritwerte im Bereich von 0,05 bis 0,3 Gewichtsprozent aufwiesen. Bei kontinuierlichem Vermischen der Reaktionspartner und anschließender diskontinuierlicher Kristallisation resultierten hingegen unter den üblichen Arbeitsbedingungen entsprechende Zeolithe mit Gritwerten zwischen 0,1 und 0,2 Gewichtsprozent.

In der FR-A-2 286 794 wird bereits ein Verfahren beschrieben, das die Herstellung von feinstteiligem Zeolith A mit einem Grit-Gehalt von höchstens 0,5 Gew.-%, vorzugsweise höchstens 0,1 Gew.-% und insbesondere höchstens 0,01 Gew.-%, ermöglicht. Bei diesem Verfahren erfolgt jedoch die Umsetzung der Reaktionskomponenten diskontinuierlich. Ferner folgt auf die eigentliche Kristallisation eine sogenannte Temperstufe, die einen vermehrten Zeitaufwand des Gesamtverfahrens bedingt.

Demgegenüber ist es die Aufgabe der vorliegenden Erfindung, ein Verfahren zur Herstellung feinstteiliger zeolithischer Natriumaluminiumsilikate zu entwickeln, das zu einem Zeolith NaA mit einem Gritanteil von höchstens 0,05 Gewichtsprozent sowie einem hohen Kationenaustauschvermögen führt.

Gegenstand der Erfindung ist demnach ein Verfahren zur Herstellung einer wäßrigen alkalischen Suspension feinstteiliger, gritarmer, kristalliner zeolithischer Natriumaluminiumsilikate der Zusammensetzung:

0,8 bis 1 3 $Na_2O$: 1 $Al_2O_3$: 1,8 bis 2 $SiO_2$

mit einem vom Trocknungsgrad abhängigen Wassergehalt, die zumindest 99,95 Gewichtsprozent eine Teilchengröße von kleiner als 50 µm und ein hohes Kationenaustauschvermögen aufweisen, durch

a) kontinuierliches Vermischen einer wäßrigen Natriumaluminatlösung mit einer wäßrigen Natriumsilikatlösung in Gegenwart überschüssiger Natronlauge bei erhöhter Temperatur sowie

b) anschließender diskontinuierlicher Kristallisation der gebildeten wäßrigen alkalischen Suspension röntgenamorpher Natriumaluminiumsilikate, die insgesamt eine Zusammensetzung entsprechend Molverhältnissen von:

3,6 bis 5 $Na_2O$: 1 $Al_2O_3$: 1,8 bis 2 $SiO_2$: 70 bis 105 $H_2O$

aufweist, bei gleichfalls erhöhter Temperatur,

welches dadurch gekennzeichnet ist, daß man

c) die beiden Reaktionskomponenten in Stufe a) bei einer Temperatur im Bereich von 40 bis 50°C miteinander vermischt,

d) in die gebildete Suspension in Stufe b) im Verlauf von 15 bis 30 Minuten unter Rühren feindispersen Wasserdampf einleitet,

e) die Suspension auf diese Weise bis zum Erreichen einer Temperatur im Bereich von 85 bis 93°C erhitzt,

f) bei dieser Kristallisationstemperatur für eine Zeitdauer von 20 bis 40 Minuten beläßt und

g) gleichzeitig mit mehrstufigen Rührwerken hoher Scherwirkung bei einer Rührerumfangsgeschwindigkeit von 5 bis 10 m/s rührt.

Überraschenderweise wurde nämlich gefunden, daß die Einhaltung der vorstehend angeführten Verfahrensmaßnahmen - in der kontinuierlich geführten Reaktionsstufe einerseits sowie in der diskontinuierlich ablaufenden Kristallisationsstufe andererseits - zur Bildung zeolithischer Natriumaluminiumsilikate vom Typ NaA mit den angestrebten, äußerst geringen Gritgehalt von höchstens 0,05 Gewichtsprozent führt. Dieses Ziel wird in der erfindungsgemäßen Weise durch ein Zusammenwirken der die Bildung feinstteiliger Zeolith-Partikel wesentlich beeinflussenden Parameter, wie sie vorstehend in den Verfahrensmerkmalen c) bis g) näher gekennzeichnet sind, erreicht. Zudem weisen die so gewonnenen Natriumaluminiumsilikate ein sehr hohes Kationenaustauschvermögen auf.

Für den ersten Reaktionsschritt des erfindungsgemäßen Verfahrens - nachfolgend auch als Fällungsstufe bezeichnet -, der zur Bildung einer wäßrigen alkalischen Suspension röntgenamorpher Natriumaluminiumsilikate führt, kommen generell alle diejenigen Verfahren in Betracht, die ein kontinuierliches Vermischen der Reaktionskomponenten - Natriumaluminatlösung und Natriumsilikatlösung - in hierfür geeigneten Reaktionsaggregaten zulassen. Beispielhaft für solche Verfahren seien hier angeführt:

- Das Vermischen der Komponenten mit Hilfe geeigneter Sprühdüsen, wobei die Reaktionspartner erst im Sprühstrahl unter Bildung des röntgenamorphen Produktes aufeinandertreffen.

- Das Vermischen der Komponenten in einer stüfig wirkenden Mischstrecke, wobei eine der beiden Reaktionskomponenten in mehrere Teilströme aufgeteilt wird, von denen einer dem Gesamtstron der anderen Reaktionskomponenten unmittelbar kontinuierlich zugefügt und die weiteren jeweils erst stromabwärts dem Strom des gebildeten Reaktionsgemisches gleichfalls kontinuierlich zudosiert werden. Als stufig wirkende Mischstrecke in vorstehenden Sinne kommen insbesondere Rührkesselkaskaden, Rührkolonnen mit durch Zwischenböden abgeteilten Kammern, stufig ausgeführte Differentialschnecken-Mischer sowie Rohrreaktoren in Frage.

Darüber hinaus können jedoch erfindungsgemäß alle entsprechenden kontinuierlich verlaufenden Verfahren zur Gewinnung röntgenamorpher Natriumalaluminiumsilikate Anwendung finden, sofern in der Fällungsstufe eine Fällungs- beziehungsweise Vermischungstemperatur im Bereich von 40 bis 50°C eingehalten wird.

Im Hinblick auf die Gewinnung eines zeolithischen Natriumaluminiumsilikats vom Typ NaA, das heißt eines Zeoliths mit einer Zusammensetzung hinsichtlich der Molverhältnisse von

0,8 bis 1,3 $Na_2O$: 1 $Al_2O_3$: 1,8 bis 2 $SiO_2$

und einem von Trocknungsgrad abhängigen Wassergehalt, ist die Dosierung der Reaktionskomponenten in dieser Fällungsstufe erfindungsgemäß so zu wählen, daß die hierbei gebildete wäßrige alkalische Suspension der röntgenamorphen Natriumaluminiumsilikate insgesamt eine Zusammensetzung entsprechend Molverhältnissen von

3,6 bis 5 $Na_2O$: 1 $Al_2O_3$: 1,8 bis 2 $SiO_2$: 70 bis 105 $H_2O$.

aufweist.

Für die der kontinuierlichen Fällungsstufe nachfolgende diskontinuierliche Kristallisationsstufe ist erfindungsgemäß die Einhaltung weiterer Parameter von wesentlicher Bedeutung.

Die in der kontinuierlichen Fällungsstufe gebildete wäßrige alkalische Suspension des röntgenamorphen Natriumaluminiumsilikats wird in der Regel zunächst in mehreren, parallel zueinander geschalteten Kristallisationsbehälter überführt, deren Anzahl und Dimensionierung zweckmäßigerweise so bemessen sein sollte, daß die Aufnahme des kontinuierlich anfallenden Suspensions-Stromes gewährleistet ist. In diesen Kristallisationsbehältern, die im Sinne der Erfindung mit mehrstufigen Rührwerken hoher Scherwirkung ausgerüstet sein sollten, erfolgt dann die chargenweise Kristallisation des amorphen Produktes.

Der eigentliche Kristallisationsprozeß wird durch ein Erwärmen der Suspension - unter stetigem Rühren

3

derselben - auf die erforderliche Kristallisationstemperatur eingeleitet. Von wesentlicher Bedeutung ist hierbei, daß dieses Aufheizen der Suspension nicht zu rasch erfolgt. Erfindungsgemäß wird nämlich die Suspension im Verlaufe von 15 bis 30 Minuten bis zum Erreichen der Kristallisationstemperatur erhitzt. Ferner ist auch die Art und Weise des Erhitzens erfindungsgemäß bedeutsam. Es hat sich nämlich gezeigt, daß hierbei ein direktes Einleiten von feindispersem Wasserdampf in die Suspension im Hinblick auf einen möglichst geringen Gritgehalt des resultierenden kristallinen produktes die besten Resultate erbringt. Das Einleiten des feindispersen Dampfes in die Suspension läßt sich beispielsweise durch eine am Boden des jeweiligen Kristallisationsbehälters angeordnete - mit vielen kleinen Öffnungen versehene - Ringleitung vornehmen. Jedoch können hierzu auch beliebige andere Anordnungen Verwendung finden, die ein direktes Einleiten von feindispersem Dampf in die Suspension gewährleisten.

Erfindungsgemäß wird die Suspension auf diese Weise bis zum Erreichen einer Temperatur im Bereich von 85 bis 93 °C erhitzt und anschließend bei dieser Kristallisationstemperatur für eine Zeitdauer von 20 bis 40 Minuten belassen, wobei das amorphe Produkt zu einem zeolithischen Natriumaluminiumsilikat vom Typ NaA kristallisiert.

Während des gesamten Kristallisationsprozesses - das heißt bereits vom Beginn des Aufheizens an - sollte erfindungsgemäß ein stetiges starkes Rühren der Suspension des amorphen beziehungsweise des sich bildenden kristallinen Produktes mit Hilfe eines mehrstufigen Rührwerkes hoher Scherleistung erfolgen. Erfindungswesentlich ist hierbei die Stärke und Intensität dieses Rührens, das heißt, daß die Rührerumfangsgeschwindigkeit 5 bis 10 Meter pro Sekunde, vorzugsweise 6 bis 8 Meter pro Sekunde, beträgt. Für diesen Zweck geeignete Rührer sind beispielsweise Turbinen oder tubinenähnliche Rührwerke sowie mehrstufige Propeller, die sich durch eine hohe Scherwirkung auszeichnen. Die Stufigkeit der Rührwerke ist hierbei in erster Linie abhängig von der geometrischen Form des jeweils gewählten Kristallisationsbehälters. Da die Scherwirkung derartiger Rührer maßgeblich von der Form des Rührwerkes beeinflußt wird, hat es sich im Sinne der Erfindung als besonders vorteilhaft erwiesen, daß man die Suspension mit axialfördernden Rührern hoher Scherwirkung, insbesondere Trapezrührern mit geschwungenen Rührflügeln rührt.

Bei Einhaltung der erfindungswesentlichen Verfahrensmerkmale - insbesondere im Rahmen der als bevorzugt gekennzeichneten Arbeitsweisen - resultiert nach vollendeter Kristallisation eine wäßrig alkalische Suspension feinstteiliger kristalliner zeolithischer Natriumaluminiumsilikate vom Typ NaA, die sich durch einen Gritanteil von höchstens 0,05 Gewichtsprozent sowie durch ein hohes Kationenaustauschvermögen auszeichnen.

Zur Charakterisierung des erhaltenen Kristallisats werden Produktproben abfiltriert, alkalifrei gewaschen, über Nacht im Vakuumtrockenschrank bei 100°C getrocknet und anhand ihres Röntgenbeugungsdiagrammes identifiziert. Die Zusammensetzung bezüglich $Na_2O$, $Al_2O_3$ und $SiO_2$ läßt sich röntgenfluoreszenzanalytisch ermitteln. Der Wassergehalt kann über den Glühverlust einer Kristallisatprobe nach einer Stunde bei 800°C bestimmt werden. Die Korngrößenverteilung wird als Volumenprozentverteilung der Kristallisatteilchen mittels eines Coulter-Counter[R]-Gerätes, beispielsweise Modell TA, gemessen.

Die Bestimmung des Gritanteils im Kristallisat - das heißt des Anteils an Teilchen mit einer Korngröße oberhalb 50μm - erfolgt durch eine modifizierte Naßsiebung nach MOCKER. Hierbei wird eine abgewogene, mit Wasser aufgeschlämmte Probe des kristallinen Materials in ein Prüfgerät nach MOCKER (DIN 53 580) auf ein Prüfsieb mit einer Maschenweite von 50μm (DIN 4188) überführt und mit Hilfe von aus rotierenden Düsen versprühtem Wasser aufgewirbelt. Die Feinanteile des kristallinen Materials werden auf diese Weise drucklos durch das Prüfsieb gespült, während die Grobanteile (= Grit) auf dem Sieb zurückbleiben. Nach einer Dauer von 2 Minuten, bei einer versprühten Wassermenge von 80 1 pro Stunde, wird das Prüfsieb im Trockenschrank bei 110°C getrocknet und anschließend durch Differenzwägung der Siebrückstand ermittelt. Der Siebrückstand ergibt sich hierbei nach der Formel:

Gewichtsprozent Siebrückstand =

$$\frac{(a-b) \cdot 100}{E} \, ,$$

mit a = Gewicht des Siebes mit Rückstand
b = Gewicht des Siebes ohne Rückstand
E = Probeneinwaage in g, bezogen auf trockenes Material.

Als Maß für das Kationenaustauschvermögen des kristallinen zeolithischen Materials wird das Calciumbindevermögen von 1 g Natriumaluminiumsilikat (Aktivsubstanz = AS) pro Liter bei einer Ausgangshärte von 30°d (Deutsche Härte) herangezogen. Zur Bestimmung des Calciumbindevermögens wird 1 l einer wäßrigen, 0,594 g $CaCl_2$ (entsprechend 300 mg CaO/l = 30°dH) enthaltenden Lösung mit verdünnter Natronlauge auf einen pH-Wert von 10 eingestellt und mit 1 g AS versetzt. Die gebildete Suspension wird anschließend für die Dauer von 15 Minuten bei einer Temperatur von $22 \pm 2$°C kräftig gerührt. Nach Abfiltrieren des Natriumaluminiumsilikats wird die Resthärte X im Filtrat durch komplexometrische Titration mittels Ethylendiamintetraessigsäure ermittelt. Das Calciumbindevermögen in mg CaO/g AS errechnet sich hieraus nach der Formel: (30 - X). 10.

Die erfindungsgemäß hergestellte Suspension feinstteiliger, gritarmer, kristalliner zeolithischer Natriumaluminiumsilikate vom Typ NaA wird nach Abschluß der Kristallisation in der Regel weiter aufbereitet. Hierzu wird beispielsweise der kristalline Feststoff abfiltriert, gewaschen und getrocknet oder je nach dem angestrebten Verwendungszweck in sonstiger gebräuchlicher Weise konfektioniert. So kann gegebenenfalls

4

auch eine wäßrige Suspension des kristallinen Natriumaluminiumsilikats zur Herstellung von Wasch- und Reinigungsmitteln Verwendung finden. Mutterlauge und Waschwässer werden mit Vorteil in den Herstellungsprozeß zurückgeführt.

Aufgrund des hohen Kationenaustauschvermögens des gewonnenen zeolithischen Natriumaluminiumsilikats, das in einem Calciumbindevermögen im Bereich von 150 bis 200 mg CaO/g A5 zum Ausdruck kommt, wird dieses vorzugsweise als heterogener anorganischer Builderstoff (Phosphatersatz) in Wasch-, Spül- und Reinigungsmitteln eingesetzt.

In den nachfolgenden Beispielen wird die Durchführung des erfindungsgemäßen Verfahrens näher erläutert.

**Beispiel 1**

Für die kontinuierlich verlaufende Fällungsstufe wurde eine vertikal angeordnete Rührkolonne mit einem Nutzvolumen von 188 1 verwendet, die durch Zwischenböden in insgesamt 28 Kammern unterteilt und mit der gleichen Anzahl von MIG-Rührern ausgestattet war. Die den Rührern gemeinsame Rührerwelle wurde mit Hilfe eines entsprechenden Motors auf eine Rührerdrehzahl von 390 min$^{-1}$ angetrieben. Der gesamte Kolonnenzylinder war mit einem Heizmantel versehen. Über geeignete Dosiervorrichtungen - Pumpen und Rotameter - wurden die auf eine Fällungstemperatur von 50°C vorgeheizten Reaktionskomponenten aus Vorlagebehältern in die unteren Kammern der Rührkolonne eingespeist. Die Fortbewegung des Reaktionsgemisches von Kammer zu Kammer erfolgte durch versetzt zueinander angeordnete Ringspalte in den Zwischenböden, so daß insgesamt ein kontinuierlich aufsteigender Produktstrom innerhalb der Kolonne resultierte. Die Dosierung der Reaktionskomponenten betrug: 549 kg/Stunde Natriumsilikatlösung, 1,315 kg/Stunde Natriumaluminatlösung sowie 1,136 kg/Stunde alkalische Mutterlauge aus einer der vorangegangenen Kristallisations stufen, wobei die Zusammensetzung des gebildeten Reaktionsgemisches insgesamt Molverhältnissen von 4,2 Na$_2$O: 1 Al$_2$O$_3$: 1,8 SiO$_2$: 95 H$_2$O entsprach.

Die am oberen Ende der Rührkolonne kontinuierlich austretende Suspension des amorphen Reaktionsproduktes wurde nach und nach in drei Kristallisationsbehälter mit einem Volumen von je 6 m$^3$ überführt, die mit zweistufigen Propellerrührwerken hoher Scherleistung ausgestattet waren. Sobald der unterste Rührflügel vollständig in die Suspension eintauchte, wurde das jeweilige Rührwerk mit einer Rührerumfangsgeschwindigkeit von 6,9 m.s$^{-1}$ in Betrieb genommen. Nach Befüllen eines Kristallisationsbehälters wurde durch eine jeweils am Boden eines jeden Behälters angeordnete Ringleitung feindisperser Wasserdampf mit einem Druck von 4 bar direkt in die Suspension eingeblasen und so die Temperatur der Suspension innerhalb von 20 Minuten auf 93°C gesteigert. Bei dieser Kristallisationstemperatur verblieb die Suspension jeweils für eine Zeitdauer von 40 Minuten unter stetigem Rühren, wobei die Rührerumfangsgeschwindigkeit weiterhin 6,9 m.s$^{-1}$ betrug. Anschließend wurden der Inhalt eines jeden Kristallisationsbehälters auf ein Filteraggregat überführt, die erhaltenen kristallinen Produkte gewaschen und getrocknet und die resultierende Mutterlauge in die Fällungsstufe des Verfahrens zurückgeführt.

Die gebildeten kristallinen Reaktionsprodukte erwiesen sich laut Röntgenbeugungsanalyse als Zeolithe vom Typ NaA. Die Bestimmung der Teilchengröße mittels Coulter-Counter ergab ein Maximum der Korngrößenverteilung bei 3 bis 5μm. Das Calciumbindevermögen betrug 175 mg CaO/ g AS; der Gritanteil 0,02 Gewichtsprozent.

**Beispiel 2**

Die Durchführung dieses Beispiels erfolgte analog Beispiel 1 mit der folgenden Änderung:
Die molare Zusammensetzung des Reaktionsgemisches betrug:
4 Na$_2$O: 1 Al$_2$O$_3$ - 1'8 SiO$_2$: 105 H$_2$O
Es resultierten hierbei kristalline Zeolithe vom Typ NaA mit einem Calciumbindevermögen von 181 mg CaO/g AS und einem Gritanteil von 0,03 Gewichtsprozent.

**Beispiel 3**

Die Durchführung dieses Beispiels erfolgte analog Beispiel 1 mit der folgenden Änderung:
Die molare Zusammensetzung des Reaktionsgemisches betrug:
4,5 Na$_2$O: 1 Al$_2$O$_3$: 1,8 SiO$_2$ - 95 H$_2$O.
Es resultierten hierbei kristalline Zeolithe vom Typ NaA mit einem Calciumbindevermögen von 172 mg CaO/g AS und einem Gritanteil von 0,03 Gewichtsprozent.

**Beispiel 4**

Die Durchführung der Fällungsstufe erfolgte analog Beispiel 1. Die Kristallisationsstufe wurde in drei Kristallisationsbehältern durchgeführt, die mit verschiedenen Rührwerken unterschiedlicher Scherwirkung ausgestattet waren. In den Behältern A und B wurde mit Balkenrührern bei einer Rührerumfangsgeschwindigkeit von weniger als 5 m.s$^{-1}$ gerührt, im Behälter C mit einem axialfördernden Trapezrührer mit geschwungenen Rührflügeln bei einer Rührerumfangsgeschwindigkeit vcn 7,1 m.s$^{-1}$. Die Aufheizgeschwindigkeit auf die Kristallisationstemperatur von 90°C betrug in allen drei Behältern 25 Minuten, die anschließende Verweilzeit 30 Minuten. Im übrigen wurde wie im Beispiel 1 angegeben verfahren. Die in allen Fällen gebildeten Zeolithe vom Typ NaA unterschieden sich im wesentlichen in den folgenden Merkmalen:

| Behälter: | A | B | C |
|---|---|---|---|
| Calciumbindevermögen in mg CaO/g AS | 177 | 171 | 172 |
| Gritanteil in Gewichtsprozent | 0,72 | 0,08 | 0,01 |

**Beispiel 5**

Es wurde analog Beispiel 1 verfahren, jedoch mit den folgenden Änderungen der Reaktionsbedingungen: Fällungstemperatur: 44°C; Aufheizdauer: 26 Minuten; anschließende Verweilzeit: 30 Minuten.

Die gebildeten Zeolithe vom Typ NaA wiesen ein Calciumbindevermögen von 169 mg CaO/g AS und einen Gritanteil von 0,02 Gewichtsprozent auf.

Die nachstehenden Vergleichsversuche - bei denen erfindungswesentliche Verfahrensmerkmale nicht eingehalten wurden - sollen gleichfalls die Bedeutung dieser Merkmale im Hinblick auf den Gritanteil der gebildeten Zeolithe verdeutlichen.

**Vergleichsbeispiel 1**

Die Durchführung erfolgte analog Beispiel 1, wobei jedoch in der Fällungsstufe die Reaktionskomponenten bei einer Temperatur von 65°C vermischt wurden. Es resultierten Zeolithe vom Typ NaA, die ein Calciumbindevermögen von 178 mg CaO/g AS sowie einen Gritanteil von 0,2 Gewichtsprozent aufwiesen.

**Vergleichsbeispiel 2**

Hierbei wurde gleichfalls analog Beispiel 1 verfahren. Das Aufheizen der in der Fällungsstufe gebildeten Suspension erfolgte jedoch innerhalb von 7 Minuten durch direktes Einblasen von Wasserdampf mittels einer Dampflanze. Die resultierenden Zeolithe vom Typ NaA wiesen ein Calciumbindevermögen von 174 mg CaO/g AS sowie einen Gritanteil von 0,34 Gewichtsprozent auf.

**Vergleichsbeispiel 3**

Vergleichsversuch 2 wurde wiederholt, wobei das Aufheizen der Suspension zwar langsamer - innerhalb von 28 Minuten -, jedoch gleichfalls durch direktes Einblasen von Wasserdampf mittels einer Dampflanze erfolgte. Es resultierten Zeolithe vom Typ NaA mit einem Calciumbindevermögen von 168 mg CaO/g AS und einem Gritanteil von 0,2 Gewichtsprozent.

Aus dem ersten Vergleichsversuch ist die Bedeutung der erfindungsgemäß vergleichsweise geringen Fällungstemperatur ersichtlich; die beiden weiteren Vergleichsversuche zeigen eindeutig den bestimmenden Einfluß der Dauer des Aufheizens einerseits sowie der Art und Weise des Aufheizens - unter Verzicht auf feindispersen Waserdampf - andererseits auf den Gritgehalt des kristallinen Produktes.

**Patentansprüche**

1. Verfahren zur Herstellung einer wäßrigen alkalischen Suspension feinstteiliger, gritarmer, kristalliner zeolithischer Natriumaluminiumsilikate der Zusammensetzung:

0,8 bis 1,3 $Na_2O$: 1 $Al_2O_3$: 1,8 bis 2 $SiO_2$ mit einem vom Trocknungsgrad abhängigen Wassergehalt, die zu mindestens 99,95 Gewichtsprozent eine Teilchengröße von kleiner als 50μm und ein hohes Kationenaustauschvermögen aufweisen, durch

a) kontinuierliches Vermischen einer wäßrigen Natriumaluminatlösung mit einer wäßrigen Natriumsilikatlösung in Gegenwart überschüssiger Natronlauge bei erhöhter Temperatur sowie

b) anschließender diskontinuierlicher Kristallisation der gebildeten wäßrigen alkalischen Suspension röntgenamorpher Natriumaluminiumsilikate, die insgesamt eine Zusammensetzung entsprechend Molverhältnissen von:

3,6 bis 5 $Na_2O$: 1 $Al_2O_3$: 1,8 bis 2 $SiO_2$: 70 bis 105 $H_2O$

aufweist, bei gleichfalls erhöhter Temperatur, dadurch gekennzeichnet, daß man

c) die beiden Reaktionskomponenten in Stufe a) bei einer Temperatur im Bereich von 40 bis 50°C miteinander vermischt,

d) in die gebildete Suspension in Stufe b) im Verlauf von 15 bis 30 Minuten unter Rühren feindispersen Wasserdampf einleitet,

e) die Suspension auf diese Weise bis zum Erreichen einer Temperatur im Bereich von 85 bis 93°C erhitzt,

f) bei dieser Kristallisationstemperatur für eine Zeitdauer von 20 bis 40 Minuten beläßt und

g) gleichzeitig mit mehrstufigen Rührwerken hoher Scherwirkung bei einer Rührerumfangsgeschwindigkeit von 5 bis 10 m/s rührt.

2. Verfahren nach Anspruch 1, dadurch gekennzeichnet, daß man die Suspension mit einer Rührerumfangsgeschwindigkeit von 6 bis 8 m/s rührt.

3. Verfahren nach Anspruch 2, dadurch gekennzeichnet, daß man die Suspension mit axialfördernden Rührern hoher Scherwirkung, insbesondere Trapezrührern mit geschwungenen Rührflügeln, rührt.

**Claims**

1. A process for the production of an aqueous alkaline suspension of very finely divided, low-grit, crystalline zeolitic sodium aluminium silicates of the following composition:

0.8 to 1.3 $Na_2O$: 1 $Al_2O_3$: 1.8 to 2 $SiO_2$

which have a water content dependent on the degree of drying, of which at least 99.95% by weight have a particle size smaller than 50 μm and which have a high cation exchange capacity, by

a) continuous mixing of an aqueous sodium aluminate solution with an aqueous sodium silicate solution in the presence of excess sodium hydroxide at elevated temperature and

b) subsequent discontinuous crystallization of the resulting aqueous alkaline suspension of X-ray amorphous sodium aluminium silicates, which overall has a composition corresponding to molar ratios of 3.6 to 5 $Na_2O$: 1 $Al_2O_3$: 1.8 to 2 $SiO_2$: 70 to 105 $H_2O$ again at elevated temperature,

characterized in that

c) in step a), the two reaction components are mixed with one another at a temperature in the range of from 40 to 50°C,

d) finely disperse steam is introduced with stirring over a period of from 15 to 30 minutes into the suspension formed in step b),

e) the suspension is heated in this way to a temperature of from 85 to 93°C,

f) this crystallization temperature is maintained for a period of from 20 to 40 minutes and

g) at the same time, the suspension is stirred with highshear multistage stirrers at a stirrer peripheral speed of from 5 to 10 m/s.

2. A process as claimed in Claim 1, characterized in that the suspension is stirred at a stirrer peripheral speed of from 6 to 8 m/s.

3. A process as claimed in Claim 2, characterized in that the suspension is stirred with high-shear axial-flow stirrers, more especially trapezium stirrers with swung stirrer blades.

**Revendications**

1- Procédé de préparation d'une suspension alcaline aqueuse de silicates de sodium-aluminium zéolithiques, cristallins, pauvres en gratte et très finement divisés de la composition suivante:

0,8 à 1,3 $Na_2O$: 1 $Al_2O_3$: 1,8 à 2 $SiO_2$

avec une teneur en eau dépendant du degré de séchage, ces silicates ayant au moins 99,95% en poids de particules d'une granularité inférieure à 50 μm et un haut pouvoir d'échange de cations, moyennant les étapes comprenant:

a) le mélange continu d'une solution aqueuse d'aluminate de sodium avec une solution aqueuse de silicate de sodium en présence de lessivede soude en excès à température élevée, ainsi que

b) la cristallisation discontinue ultérieure de la suspension alcaline aqueuse formée de silicates de sodium-aluminium amorphes aux rayons X, cette suspension ayant, dans l'ensemble, une composition se situant dans les rapports molaires suivants:

3,6 à 5 $Na_2O$: 1 $Al_2O_3$: 1,8 à 2 $SiO_2$: 70 à 105 $H_2O$, également à température élevée, caractérisé en ce que:

c) lors de l'étape a), on mélange les deux composants réactionnels l'un avec l'autre à une température se situant dans l'intervalle allant de 40 à 50°C,

d) tout en agitant, au cours d'une période de 15 à 30 minutes, on introduit de la vapeur d'eau finement dispersée dans la suspension formée lors de l'étape b),

e) on chauffe de la sorte la suspension jusqu'à ce qu'on atteigne une température se situant dans l'intervalle allant de 85 à 93°C,

f) on abandonne à cette température de cristallisation pendant un laps de temps de 20 à 40 minutes, et

g) on agite simultanément avec des agitateurs à plusieurs étages à haut effet de cisaillement et à une vitesse périphérique de 5 à 10 m/s.

2. Procédé selon la revendication 1, caractérisé en ce qu'on agite la suspension avec un agitateur à une vitesse périphérique de 6 à 8 m/s.

3. Procédé selon la revendication 2, caractérisé en ce qu'on agite la suspension avec des agitateurs à circulation axiale à haut effet de cisaillement, en particulier, des agitateurs trapézoïdaux comportant des pales incurvées.

7